# EUROPÄISCHE PATENTSCHRIFT

(11) **EP 2 979 111 B1**
(45) Veröffentlichungstag und Bekanntmachung des Hinweises auf die Patenterteilung: **14.10.2020**
(21) Anmeldenummer: 14712301.2
(22) Anmeldetag: 25.03.2014
(51) Int. Cl.: G02B 7/00, G01S 17/08, G01S 7/481, G02B 15/04, G02B 19/00

(54) **VORRICHTUNG ZUR OPTISCHEN MESSUNG EINER DISTANZ ZU EINEM REFLEKTIERENDEN ODER STREUENDEN ZIELOBJEKT**
DEVICE FOR THE OPTICAL MEASUREMENT OF THE DISTANCE FROM A REFLECTING OR SCATTERING TARGET OBJECT
DISPOSITIF SERVANT À MESURER DE MANIÈRE OPTIQUE UNE DISTANCE PAR RAPPORT À UN OBJET CIBLE À ACTION RÉFLÉCHISSANTE OU DISPERSIVE

(30) Priorität: 28.03.2013 DE 102013205589
(43) Veröffentlichungstag der Anmeldung: 03.02.2016
(73) Patentinhaber: Hilti Aktiengesellschaft, 9494 Schaan (LI)
(72) Erfinder: WINTER, Andreas, A-6800 Feldkirch (AT); GOGOLLA, Torsten, CH-9494 Schaan (LI); EYRICH, Petra, CH-9443 Widnau (CH)
(74) Vertreter: Hilti Aktiengesellschaft Corporate Intellectual Property
(86) Internationale Anmeldenummer: PCT/EP2014/055949
(87) Internationale Veröffentlichungsnummer: WO 2014/154685

(56) Entgegenhaltungen:
- EP-A2- 0 766 101
- WO-A1-2005/029124
- US-A- 5 283 622
- US-A1- 2005 219 504

## Beschreibung

### Technisches Gebiet

Die vorliegende Erfindung betrifft eine Vorrichtung zur optischen Messung einer Distanz zu einem reflektierenden oder streuenden Zielobjekt gemäß dem Oberbegriff des Anspruchs 1.

### Stand der Technik

DE 197 27 988 A1 offenbart eine bekannte Vorrichtung zur optischen Distanzmessung zu einem Zielobjekt bestehend aus einem Teleskop, einer Distanzmesseinrichtung und einer Einstelleinrichtung zum Anpassen der Laserstrahldivergenz oder des Laserstrahldurchmessers. Die Distanzmesseinrichtung umfasst eine Strahlquelle, die einen Laserstrahl aussendet, einen Detektor, der einen am Zielobjekt reflektierten und/oder gestreuten Empfangsstrahl empfängt, und ein Strahlformungssystem mit einer Sendeoptik zur Strahlformung des Laserstrahls und einer Empfangsoptik zur Strahlformung des Empfangsstrahls. Die Laserstrahldivergenz oder der Laserstrahldurchmesser können über den Austrittswinkel des Laserstrahls an der Strahlquelle, über die Veränderung der optischen Weglänge zwischen der Strahlquelle und der Sendeoptik oder durch eine zusätzliche Sendeoptik hinter der Strahlquelle verändert werden. Nachteilig ist, dass alle vorgeschlagenen Maßnahmen zum Anpassen der Laserstrahldivergenz oder des Laserstrahldurchmessers innerhalb der Distanzmesseinrichtung und die Stabilität der Distanzmesseinrichtung reduzieren.

Aus DE 198 40 049 A1 ist eine Vorrichtung zur optischen Distanzmessung zu einem reflektierenden oder streuenden Zielobjekt bekannt. Die Vorrichtung umfasst eine Distanzmesseinrichtung und eine Einstelleinrichtung zum Anpassen des Laserstrahls an das Zielobjekt. Die Distanzmesseinrichtung umfasst eine oder zwei Strahlquellen, einen Detektor und ein Strahlformungssystem mit einer Sendeoptik und einer Empfangsoptik. Die Strahlquellen erzeugen einen ersten Laserstrahl mit einer großen Strahldivergenz und einen zweiten Laserstrahl mit einer geringen Strahldivergenz, wobei der erste Laserstrahl zur Distanzmessung von streuenden Zielobjekten und der zweite Laserstrahl zur Distanzmessung von reflektierenden Zielobjekten vorgesehen sind.

Die Auswahl eines geeigneten Laserstrahls kann an den Strahlquellen oder am Detektor erfolgen. In einer Ausführungsform werden der erste und zweite Laserstrahl gleichzeitig ausgesandt und treffen auf das Zielobjekt. Im Strahlengang des Empfangsstrahls sind vor dem Detektor optische Filter angeordnet, die nur den ersten oder zweiten Laserstrahl hindurch lassen. Die optischen Filter sind in einem manuell bedienbaren oder motorisch angetriebenen Filterrad oder Filterschieber angeordnet, die einzelne optische Filter in den Strahlengang des Empfangsstrahls einbringen. Nachteilig ist, dass zwei Laserstrahlen mit unterschiedlichen Strahldivergenzen erforderlich sind, um die Distanzmessung an das Zielobjekt anzupassen. Um die unterschiedlichen Strahldivergenzen zu erzeugen, sind mehrere Strahlengänge und Strahlformungsoptiken erforderlich, die den Platzbedarf erhöhen.

EP 0 766 101 A2 offenbart eine Vorrichtung zur optischen Messung einer Distanz zu einem reflektierenden oder streuenden Zielobjekt mit einer Distanzmesseinrichtung und einer Einstelleinrichtung. Die Distanzmesseinrichtung umfasst eine Strahlquelle, die einen Laserstrahl aussendet, einen Detektor, der einen am Zielobjekt reflektierten und/oder gestreuten Empfangsstrahl empfängt, und ein erstes Strahlformungssystem mit einer ersten Sendeoptik zur Strahlformung des Laserstrahls und einer ersten Empfangsoptik zur Strahlformung des Empfangsstrahls. Die Einstelleinrichtung umfasst eine zweite Sendeoptik zur Strahlformung des Laserstrahls, wobei die zweite Sendeoptik zwischen einer ersten und zweiten Position verstellbar ist. Nachteilig ist, dass die Einstelleinrichtung innerhalb der Distanzmesseinrichtung angeordnet ist und die Stabilität der Distanzmesseinrichtung durch die Einstelleinrichtung beeinträchtigt wird. Außerdem weist die Distanzmesseinrichtung eine Vielzahl an optischen Komponenten auf.

### Darstellung der Erfindung

Die Aufgabe der vorliegenden Erfindung besteht in der Entwicklung einer Vorrichtung zur optischen Distanzmessung für reflektierende und streuende Zielobjekte, bei der die Anzahl an optischen Komponenten reduziert ist und bei der die Anforderungen an die Fertigungstoleranzen der Komponenten ebenfalls reduziert sind.

Diese Aufgabe wird bei der eingangs genannten Vorrichtung zur optischen Distanzmessung erfindungsgemäß durch die Merkmale des Anspruchs 1 gelöst. Vorteilhafte Weiterbildungen sind in den abhängigen Ansprüchen angegeben.

Erfindungsgemäß ist die Einstelleinrichtung außerhalb der Distanzmesseinrichtung angeordnet und die zweite Sendeoptik ist als Zerstreuungsoptik ausgebildet. Die als Kollimationsoptik ausgebildete erste Sendeoptik der Distanzmesseinrichtung erzeugt einen kollimierten Laserstrahl, der anschließend auf die Zerstreuungsoptik der Einstelleinrichtung trifft. Dabei sind die optischen Eigenschaften der Kollimationsoptik an streuende Zielobjekte angepasst und die Zerstreuungsoptik ist für die Distanzmessung von reflektierenden Zielobjekten vorgesehen. Die erste Position der zweiten Sendeoptik im Laserstrahl ist für reflektierende Zielobjekte vorgesehen und die zweite Position der zweiten Sendeoptik außerhalb des Laserstrahls für streuende Zielobjekte. Die zweite Sendeoptik hat den Vorteil, dass die Strahldivergenz, der Strahldurchmesser oder die Strahldivergenz und der Strahldurchmesser des Laserstrahls an die Eigenschaften des Zielobjektes und/oder die Entfernung zum Zielobjekt angepasst werden können. Durch die Anordnung der Einstelleinrichtung außerhalb der Distanzmesseinrichtung wird die Stabilität der Distanzmesseinrichtung nicht beeinträchtigt. Der ausgesandte Laserstrahl wird zunächst von der ersten Sendeoptik kollimiert und der kollimierte Laserstrahl trifft auf die zweite Sendeoptik. Dadurch, dass der kollimierte Laserstrahl auf die zweite Sendeoptik trifft, sind die Toleranzanforderungen an die Einstelleinrichtung reduziert gegenüber einer Ausführung, bei der ein divergenter Laserstrahl auf die Einstelleinrichtung trifft.

Bevorzugt weist die Distanzmesseinrichtung einen Optikträger mit einer ersten Aufnahme zur Befestigung einer ersten der elektro-optischen Komponenten und einer zweiten Aufnahme zur Befestigung des ersten Strahlformungssystems auf. Der Optikträger ist besonders bevorzugt monolithisch ausgebildet und ermöglicht einen kompakten Aufbau der Distanzmesseinrichtung. Besonders bevorzugt weist die Distanzmesseinrichtung eine Leiterplatte mit einer Aufnahme zur Befestigung einer zweiten der elektro-optischen Komponenten und einer Verbindungseinrichtung, die die Leiterplatte mit dem Optikträger verbindet, auf.

Besonders bevorzugt weist die Einstelleinrichtung mehrere, zweite Sendeoptiken zur Strahlformung des Laserstrahls auf, wobei die zweiten Sendeoptiken als Zerstreuungsoptiken mit verschiedenen aufweitenden Eigenschaften ausgebildet sind. Dabei sind die aufweitenden Eigenschaften der Zerstreuungsoptiken an unterschiedliche Entfernungsbereiche der reflektierenden Zielobjekte angepasst. Um sicherzustellen, dass der Laserstrahl am Zielobjekt reflektiert wird und als reflektierter Empfangsstrahl von der Distanzmesseinrichtung erfasst wird, ist in geringen Entfernungen zum Zielobjekt eine starke Strahlaufweitung des Laserstrahls erforderlich. Bei großen Entfernungen der Distanzmesseinrichtung zum Zielobjekt würde eine starke Aufweitung des Laserstrahls dazu führen, dass nur ein geringer Anteil des Laserstrahls am Zielobjekt reflektiert wird und als reflektierter Empfangsstrahl auf die Distanzmesseinrichtung trifft. Ist die vom Detektor gemessene Intensität des Empfangsstrahls zu gering, nimmt die Ungenauigkeit der Distanzmessung zu. Eine Einstelleinrichtung mit verschiedenen Zerstreuungsoptiken ermöglicht es, die Strahlaufweitung des Laserstrahls an den Entfernungsbereich der reflektierenden Zielobjekte anzupassen.

Eine automatische Auswahl einer geeigneten Zerstreuungsoptik kann in einem iterativen Verfahren erfolgen. In einem ersten Schritt erfolgt eine Distanzmessung mit einer ersten Zerstreuungsoptik. Die Intensität des gemessenen Distanzwertes wird mit einem vorgegebenen Wertebereich verglichen. Unterschreitet die Intensität die untere Grenze des Wertebereichs, wurde der Laserstrahl zu stark aufgeweitet, überschreitet die Intensität die obere Grenze des Wertebereichs, wurde der Laserstrahl nicht stark genug aufgeweitet. Liegt die gemessene Intensität innerhalb des Wertebereichs, ist die geeignete Zerstreuungsoptik im Laserstrahl angeordnet. Wenn die Intensität außerhalb des Wertebereichs liegt, wird eine zweite Zerstreuungsoptik im Laserstrahl angeordnet und eine weitere Distanzmessung ausgeführt. Der Distanzwert wird wieder mit dem Wertebereich verglichen. Vorteilhaft ist es, die Zerstreuungsoptiken in aufsteigender Weise (zunehmende Strahlaufweitung) oder in absteigender Weise (abnehmende Strahlaufweitung) im Laserstrahl anzuordnen. Grundsätzlich möglich ist auch eine beliebige Auswahl der Zerstreuungsoptiken, um die geeignete Zerstreuungsoptik iterativ zu ermitteln.

In einer bevorzugten Ausführung umfasst die Einstelleinrichtung ein Optikrad, das um eine Drehachse verstellbar ist. In ein Optikrad, das um eine Drehachse drehbar ausgebildet ist, können mehrere Zerstreuungsoptiken integriert werden, so dass die Strahlaufweitung des Laserstrahls an den Entfernungsbereich der reflektierenden Zielobjekte angepasst werden kann. Ein Optikrad weist einen geringen Platzbedarf auf. Der Antrieb des Optikrades kann motorisch mittels einer motorischen Antriebseinrichtung erfolgen oder manuell vom Bediener durchgeführt werden.

In einer alternativen Ausführung umfasst die Einstelleinrichtung einen Optikschieber, der entlang einer Translationsachse verstellbar ist. Der Antrieb des Optikschiebers kann motorisch mittels einer motorischen Antriebseinrichtung erfolgen oder manuell vom Bediener durchgeführt werden.

In einer bevorzugten Weiterentwicklung weist die Einstelleinrichtung eine zwischen einer ersten und zweiten Position verstellbare, zweite Empfangsoptik zur Strahlformung des Empfangsstrahls auf, wobei die zweite Empfangsoptik in der ersten Position im Empfangsstrahl und in der zweiten Position außerhalb des Empfangsstrahls angeordnet ist. Die zweite Empfangsoptik hat den Vorteil, dass die Eigenschaften der Einstelleinrichtung an die Eigenschaften des reflektierenden Zielobjektes und/oder die Entfernung zum reflektierenden Zielobjekt angepasst werden können. Mit Hilfe der zweiten Empfangsoptik kann der am Zielobjekt reflektierte Empfangsstrahl gedämpft werden, um ein Übersteuern des Detektors zu verhindern.

Besonders bevorzugt ist die erste Empfangsoptik als Fokussieroptik und die zweite Empfangsoptik als Streuscheibe ausgebildet. Der am Zielobjekt reflektierte Laserstrahl trifft zunächst auf die Streuscheibe. Über die Eigenschaften der Streuscheibe kann der Anteil des reflektierten Laserstrahls angepasst werden, der auf die Fokussieroptik trifft.

Besonders bevorzugt weist die Einstelleinrichtung mehrere, zweite Empfangsoptiken zur Strahlformung des Empfangsstrahls auf, wobei die zweiten Empfangsoptiken als Streuscheiben mit verschiedenen Eigenschaften ausgebildet sind. Dabei sind die Eigenschaften der zweiten Empfangsoptiken an unterschiedliche Entfernungsbereiche der reflektierenden Zielobjekte angepasst. Über die Eigenschaften der verschiedenen Streuscheiben kann der Anteil des reflektierten Empfangsstrahls angepasst werden, der auf die Fokussieroptik trifft.

In einer bevorzugten Weiterentwicklung sind die zweite Sendeoptik und die zweite Empfangsoptik in eine gemeinsame zweite Strahlformungsoptik integriert. Dabei ist die zweite Strahlformungsoptik besonders bevorzugt zwischen einer ersten und zweiten Position verstellbar, wobei die zweite Sendeoptik in der ersten Position im Laserstrahl und in der zweiten Position außerhalb des Laserstrahls angeordnet ist und die zweite Empfangsoptik in der ersten Position im Empfangsstrahl und in der zweiten Position außerhalb des Empfangsstrahls angeordnet ist. Die Integration der zweiten Sendeoptik und der zweiten Empfangsoptik in eine gemeinsame zweite Strahlformungsoptik vereinfacht den Aufbau der Einstelleinrichtung und reduziert die Anzahl der benötigten Komponenten. Je weniger Komponenten erforderlich sind, umso kompakter können die Distanzmesseinrichtung und die Einstelleinrichtung ausgestaltet sein.

Bei einem koaxialen Aufbau der Distanzmesseinrichtung sind die Sende- und Empfangsoptiken koaxial zueinander angeordnet und bei einem paraaxialen Aufbau der Distanzmesseinrichtung sind die Sende- und Empfangsoptiken nebeneinander angeordnet.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Vorrichtung zur optischen Distanzmessung zu einem reflektierenden oder streuenden Zielobjekt bestehend aus einer Distanzmesseinrichtung und einer außerhalb der Distanzmesseinrichtung angeordneten, motorisch verstellbaren Einstelleinrichtung;
- FIG. 2: den Aufbau der Distanzmesseinrichtung und der motorisch verstellbaren Einstelleinrichtung der FIG. 1 im Detail;
- FIG. 3: eine alternative Ausführungsform einer erfindungsgemäßen Vorrichtung zur optischen Distanzmessung bestehend aus einer Distanzmesseinrichtung und einer Einstelleinrichtung;
- FIG. 4: eine alternative Ausführungsform für die Einstelleinrichtung der FIG. 3; und
- FIG. 5: die in FIG. 1 dargestellte erfindungsgemäße Vorrichtung zur optischen Distanzmessung in einem Vermessungsgerät mit einer Kameraeinrichtung.

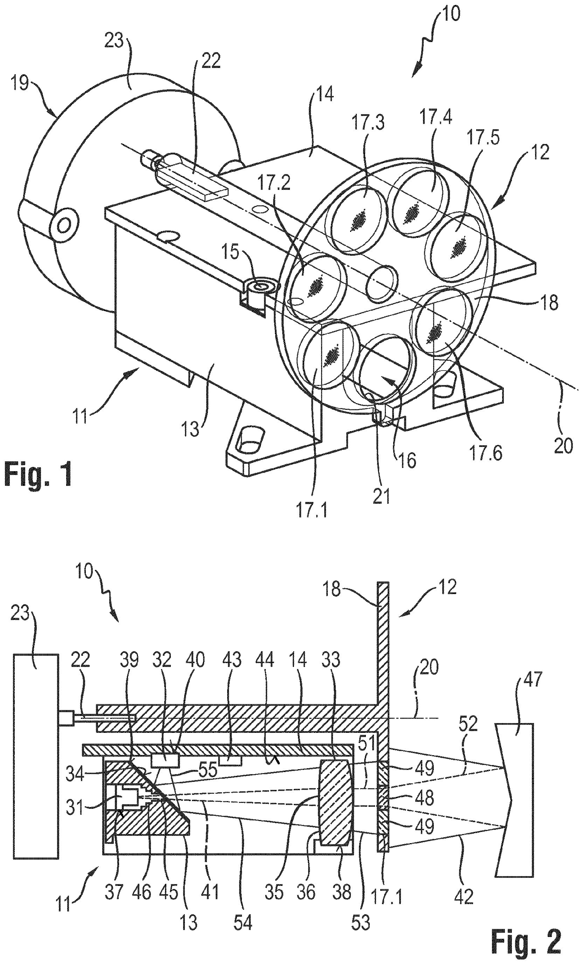

**FIG. 1** zeigt eine erste Ausführungsform einer erfindungsgemäßen Vorrichtung **10** zur optischen Distanzmessung zu einem reflektierenden oder streuenden Zielobjekt bestehend aus einer Distanzmesseinrichtung **11** und einer außerhalb der Distanzmesseinrichtung 11 angeordneten Einstelleinrichtung **12.** Dabei wird die Distanz aus einer Zeitdifferenz zwischen einem ausgesandten Laserstrahl und einem, am Zielobjekt reflektierten und/oder gestreuten Empfangsstrahl bestimmt. Mit Hilfe der Einstelleinrichtung 12 werden der Laserstrahl und der Empfangsstrahl an die Eigenschaften des Zielobjektes und ggfs. den Entfernungsbereich zum Zielobjekt angepasst. Bei den Zielobjekten werden reflektierende Zielobjekte, bei denen der Laserstrahl überwiegend reflektiert wird, und streuende Zielobjekte, bei denen der Laserstrahl überwiegend gestreut wird, unterschieden.

Die Distanzmesseinrichtung 11 umfasst einen Optikträger **13** und eine Leiterplatte **14,** die über eine Verbindungseinrichtung **15** mit dem Optikträger 13 verbunden ist. In der Distanzmesseinrichtung 11 wird ein Laserstrahl erzeugt, der über eine Auskoppelöffnung **16** im Optikträger 13 aus der Messeinrichtung 11 austritt und auf die Einstelleinrichtung 12 trifft. Die Einstelleinrichtung 12 umfasst sechs verschiedene optische Elemente **17.1-17.6,** die in einem drehbaren Optikrad **18** befestigt sind und mittels einer motorischen Antriebseinrichtung **19** um eine Drehachse **20** drehbar sind.

Die optischen Elemente 17.1-17.6 der Einstelleinrichtung 12 sind als Strahlformungsoptiken mit einer Sendeoptik für den Laserstrahl und einer Empfangsoptik für den Empfangsstrahl ausgebildet. Dabei sind die Sendeoptiken und die Empfangsoptiken jeweils koaxial zueinander angeordnet und in die Strahlformungsoptiken 17.1-17.6 integriert. Die Strahlformungsoptiken 17.1-17.6 unterscheiden sich in ihren strahlformenden Eigenschaften und sind zur Distanzmessung von reflektierenden Zielobjekten in verschiedenen Entfernungsbereichen vorgesehen. Die Sendeoptiken sind als Zerstreuungsoptiken mit unterschiedlicher Strahlaufweitung des Laserstrahls ausgebildet. Je geringer die Entfernung des reflektierenden Zielobjektes zur Distanzmesseinrichtung 11 ist, umso stärker muss der Laserstrahl aufgeweitet werden. Die Empfangsoptiken sind als Streuscheiben ausgebildet. Über die Eigenschaften der Streuscheiben wird der Anteil des reflektierten Empfangsstrahls angepasst, der auf die Distanzmesseinrichtung 11 trifft. Das Optikrad 18 weist neben den sechs Strahlformungsoptiken 17.1-17.6 eine weitere Aufnahme **21** auf, in der keine Strahlformungsoptik eingesetzt ist und keine Strahlformung des Laserstrahls und des Empfangsstrahls erfolgt.

Das Optikrad 18 ist drehfest mit einem Achselement **22** verbunden, das von einem Antriebsmotor **23** um die Drehachse 20 drehbar ist; mittels einer Winkelsensoreinrichtung wird der Drehwinkel des Antriebsmotors 23 erfasst. Der Antrieb des Optikrades 18 um die Drehachse 20 kann alternativ über eine manuelle Dreheinrichtung erfolgen. Das Optikrad 18 kann durch eine Drehung um die Drehachse 20 in sieben Winkelpositionen angeordnet werden. In sechs Winkelpositionen ist eine der Strahlformungsoptiken 17.1-17.6 im Laserstrahl angeordnet und in der siebten Winkelposition sind die Strahlformungsoptiken 17.1-17.6 außerhalb des Laserstrahls und außerhalb des Empfangsstrahls angeordnet. Die siebte Winkelposition ist zur Distanzmessung von streuenden Zielobjekten vorgesehen, wohngegen die Winkelpositionen, in denen eine der Strahlformungsoptiken 17.1-17.6 im Laserstrahl und im Empfangsstrahl angeordnet ist, zur Distanzmessung von reflektierenden Zielobjekten vorgesehen sind.

**FIG. 2** zeigt den Aufbau der Distanzmesseinrichtung 11 und der motorisch verstellbare Einstelleinrichtung 12 der erfindungsgemäßen Vorrichtung 10 zur optischen Distanzmessung der FIG. 1 im Detail.

Die Distanzmesseinrichtung 11 umfasst eine als Strahlquelle **31** ausgebildete erste elektro-optische Komponente, eine als Detektor **32** ausgebildete zweite elektro-optische Komponente, ein Strahlformungssystem **33,** eine Strahlteilungsoptik **34,** den Optikträger 13 und die Leiterplatte 14. Das Strahlformungssystem 33 umfasst eine Sendeoptik **35** zur Strahlformung des Laserstrahls und eine Empfangsoptik **36** zur Strahlformung des Empfangsstrahls, die in eine gemeinsame Strahlformungsoptik 33 integriert sind. Die Strahlquelle 31, die Strahlformungsoptik 33 und die Strahlteilungsoptik 34 sind am Optikträger 13 befestigt und der Detektor 32 ist an der Leiterplatte 14 befestigt. Der Optikträger 13 weist eine erste Aufnahme **37** für die Strahlquelle 31, eine zweite Aufnahme **38** für die Strahlformungsoptik 33 und eine dritte Aufnahme **39** für die Strahlteilungsoptik 34 auf. Der Detektor 32 ist auf der Leiterplatte 14 in einer weiteren Aufnahme **40** befestigt.

Die Strahlquelle 31 ist als Laserdiode ausgebildet, die einen sichtbaren oder infraroten Laserstrahl **41** erzeugt. Der Detektor 32 ist als Fotodiode ausgebildet, die einen vom Zielobjekt reflektierten und/oder gestreuten Empfangsstrahl **42** empfängt. Die Strahlteilungsoptik 34 trennt den Laserstrahl vom koaxial verlaufenden Empfangsstrahl, sie ist im Strahlengang des Laserstrahls zwischen der Strahlquelle 31 und der Strahlformungsoptik 33 und im Strahlengang des Empfangsstrahls zwischen der Strahlformungsoptik 33 und dem Detektor 32 angeordnet. Eine Steuer- und Auswerteeinrichtung **43** ist mit der Strahlquelle 31 und dem Detektor 32 verbunden und bestimmt aus einer Zeitdifferenz zwischen einem Referenzstrahl und dem Empfangsstrahl die Distanz zum Zielobjekt.

Der Detektor 32 ist auf einer dem Optikträger 13 zugewandten Vorderseite **44** der Leiterplatte 14 angeordnet und mit der Leiterplatte 14 fest über eine Lötverbindung verbunden, wobei der Detektor 32 beispielsweise bei der Herstellung der Leiterplatte 14 automatisch bestückt und verlötet werden kann. Der Detektor 32 ist ausschließlich von der Leiterplatte 14 mechanisch gehalten, es sind keine Verbindungsmittel vorhanden, die den Detektor 32 unmittelbar mit dem Optikträger 13 verbinden. Der Optikträger 13 ist an einer, dem Detektor 32 zugewandten, Seite offen ausgebildet und mit einer Kontaktfläche über die Verbindungseinrichtung 15 mit der Leiterplatte 14 verbunden. Die Verbindungseinrichtung 15 ist während der Justierung der Distanzmesseinrichtung 11 lösbar ausgebildet.

Im Strahlengang des Laserstrahls 41 ist zwischen der Strahlquelle 31 und der Strahlteilungsoptik 33 eine Blende **45** angeordnet, die in den monolithischen Optikträger 13 integriert ist. Die Blende 45 dient dazu, den Öffnungswinkel der Strahlquelle 31 zu begrenzen und die Geometrie des Laserstrahls 41 an die Strahlteilungsoptik 34 und die Strahlformungsoptik 33 anzupassen. Zwischen der Strahlquelle 31 und der Blende 45 ist eine Lichtfalle **46** angeordnet, die wie die Blende 45 in den monolithischen Optikträger 13 integriert ist. Die Lichtfalle 46 dient dazu, auftreffendes Licht zu absorbieren und unerwünschte Reflektionen zu verhindern. Dazu ist die Lichtfalle 46 auf der Innenseite mit einer reflexarmen, absorbierenden Beschichtung versehen. Durch die Blende 45 und die Lichtfalle 46 werden optisches und elektrisches Übersprechen von der Strahlquelle 31 zum Detektor 32 reduziert.

Bei der in FIG. 2 gezeigten Vorrichtung 10 wird die Distanz zu einem reflektierenden Zielobjekt **47** gemessen, das sich in kurzer Entfernung zur Distanzmesseinrichtung 11 befindet. Die Strahlformungsoptik 17.1 ist für die Distanzmessung zu reflektierenden Zielobjekten in kurzer Entfernung vorgesehen und daher im Strahlengang des Laserstrahls und des Empfangsstrahls angeordnet. Die Strahlformungsoptik 17.1 weist einen Sendebereich **48** zur Strahlformung des Laserstrahls 41 und einen Empfangsbereich **49** zur Strahlformung des Empfangsstrahls 42 auf. Der Sendebereich wird als zweite Sendeoptik 48 und der Empfangsbereich als zweite Empfangsoptik 49 bezeichnet. Die zweite Sendeoptik 48 und die zweite Empfangsoptik 49 sind in die gemeinsame Strahlformungsoptik 17.1 integriert. Analog zur Strahlformungsoptik 17.1 weisen die Strahlformungsoptiken 17.2-17.6 des Optikrades 18 jeweils einen Sendebereich 48 und einen Empfangsbereich 49 auf, die als zweite Sendeoptik 48 und zweite Empfangsoptik 49 bezeichnet werden.

Die Strahlquelle 31 sendet den Laserstrahl 41 aus, der auf die Strahlteilungsoptik 34 gerichtet ist. An der Strahlteilungsoptik 34 wird ein größtmöglicher Teil des Laserstrahls 41 transmittiert und trifft auf die erste Sendeoptik 35, an der eine erste Strahlformung erfolgt. Die erste Sendeoptik 35 ist als Kollimationsoptik ausgebildet, die den Laserstrahl 41 kollimiert und als kollimierten Laserstrahl **51** auf die zweite Sendeoptik 48 richtet. Die optischen Eigenschaften der Kollimationsoptik 35 sind an die Distanzmessung von streuenden Zielobjekten angepasst. Der kollimierte Laserstrahl 51 trifft auf die zweite Sendeoptik 48, die im Strahlengang des kollimierten Laserstrahls 51 angeordnet ist und an der eine Aufweitung des Laserstrahls 51 erfolgt. Der aufgeweitete Laserstrahl **52** trifft auf das Zielobjekt 47 und wird am Zielobjekt 47 reflektiert.

Der am Zielobjekt 47 reflektierte Empfangsstrahl 42 trifft auf die zweite Empfangsoptik 49, die den Empfangsstrahl 42 formt und als einfach geformten Empfangsstrahl **53** auf die erste Empfangsoptik 36 richtet. An der ersten Empfangsoptik 36 erfolgt eine weitere Strahlformung des Empfangsstrahls 53. Der zweifach geformte Empfangsstrahl **54** wird auf die Strahlteilungsoptik 34 gerichtet und an der Strahlteilungsoptik 34 umgelenkt. Der umgelenkte Empfangsstrahl **55** trifft auf den Detektor 32. Die Strahlteilungsoptik 34 sorgt dafür, dass die optische Achse des umgelenkten Empfangsstrahls 55 und die optische Achse des ausgesandten Laserstrahls 41 voneinander verschieden sind.

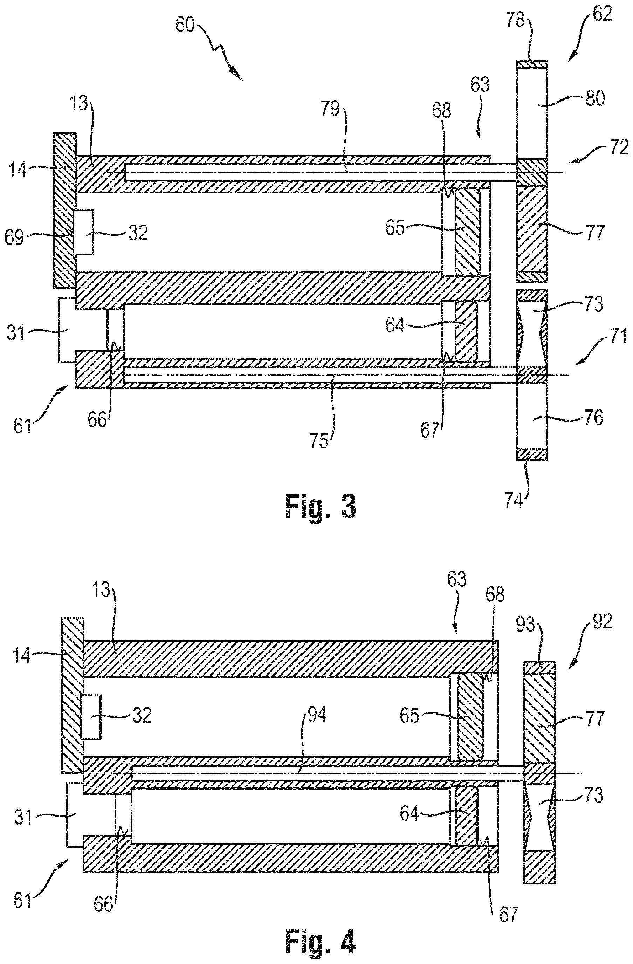

**FIG. 3** zeigt eine alternative Ausführungsform einer erfindungsgemäßen Vorrichtung **60** zur optischen Distanzmessung zu einem reflektierenden oder streuenden Zielobjekt bestehend aus einer Distanzmesseinrichtung **61** und einer Einstelleinrichtung **62.** Die Distanzmesseinrichtung 61 unterscheidet sich von der Distanzmesseinrichtung 11 dadurch, dass der Strahlengang des Laserstrahls und des Empfangsstrahls parallel versetzt angeordnet sind. Die Distanzmesseinrichtung 11 weist eine sogenannte koaxiale Anordnung der Strahlquelle 31 und des Detektors 32 auf und die Distanzmesseinrichtung 61 eine paraaxiale Anordnung.

Die Distanzmesseinrichtung 61 umfasst neben der Strahlquelle 31 und dem Detektor 32 ein Strahlformungssystem **63** mit einer ersten Sendeoptik **64** zur Strahlformung des Laserstrahls und einer ersten Empfangsoptik **65** zur Strahlformung des Empfangsstrahls. Die Strahlquelle 31, die erste Sendeoptik 64 und die erste Empfangsoptik 65 sind am Optikträger 13 befestigt und der Detektor 32 ist an der Leiterplatte 14 befestigt. Der monolithische Optikträger 13 weist eine erste Aufnahme **66** für die Strahlquelle 31, eine zweite Aufnahme **67** für die erste Sendeoptik 64 und eine dritte Aufnahme **68** für die erste Empfangsoptik 65 auf. Der Detektor 32 ist auf der Leiterplatte 14 in einer weiteren Aufnahme **69** befestigt.

Die Einstelleinrichtung 62 besteht aus einer ersten Einstelleinrichtung **71** für den Laserstrahl und einer zweiten Einstelleinrichtung **72** für den Empfangsstrahl. Die erste Einstelleinrichtung 71 umfasst ein optisches Element **73,** das in einem ersten Optikrad **74** befestigt ist und um eine erste Drehachse **75** drehbar ausgebildet ist. Das optische Element 73 ist als Zerstreuungsoptik ausgebildet und wird als zweite Sendeoptik 73 bezeichnet. Das erste Optikrad 74 weist neben der zweiten Sendeoptik 73 eine weitere Aufnahme **76** auf, in die keine Strahlformungsoptik eingesetzt ist; außerdem können weitere, zweite Sendeoptiken 73 mit unterschiedlicher Strahlaufweitung im ersten Optikrad 74 angeordnet sein. Die zweite Einstelleinrichtung 72 umfasst ein optisches Element **77,** das in einem zweiten Optikrad **78** befestigt ist und um eine zweite Drehachse **79** drehbar ausgebildet ist. Das optische Element 77 ist als Streuscheibe ausgebildet und wird als zweite Empfangsoptik 77 bezeichnet. Das zweite Optikrad 78 weist neben der zweiten Empfangsoptik 77 eine weitere Aufnahme **80** auf, in die keine Strahlformungsoptik eingesetzt ist; außerdem können weitere, zweite Empfangsoptiken 77 mit unterschiedlichen Streueigenschaften im zweiten Optikrad 78 angeordnet sein.

**FIG. 4** zeigt eine alternative Ausführungsform einer Einstelleinrichtung **92** für die erfindungsgemäße Vorrichtung 60 zur optischen Distanzmessung. Die Einstelleinrichtung 92 unterscheidet sich von der Einstelleinrichtung 62 der FIG. 3 dadurch, dass die zweite Sendeoptik 73 zur Strahlformung des Laserstrahls und die zweite Empfangsoptik 77 zur Strahlformung des Empfangsstrahls in einem gemeinsamen Optikrad **93** angeordnet sind. Das Optikrad 93 ist um eine Drehachse **94** drehbar ausgebildet und weist zusätzlich die weiteren Aufnahmen 76, 80 auf, in die keine Strahlformungsoptiken eingesetzt sind.

Das Optikrad 93 ist zwischen zwei verschiedenen Winkelpositionen verstellbar. Bei der in FIG. 4 gezeigten, ersten Winkelposition des Optikrades 93 sind die zweite Sendeoptik 73 im Laserstrahl und die zweite Empfangsoptik 77 im Empfangsstrahl angeordnet. Die zweite Sendeoptik 73 und die zweite Empfangsoptik 77 sind auf die Distanzmessung eines reflektierenden Zielobjektes angepasst. Wird das Optikrad 93 in die zweite Winkelposition gedreht, sind die zweite Sendeoptik 73 außerhalb des Laserstrahls und die zweite Empfangsoptik 77 außerhalb des Empfangsstrahls angeordnet.

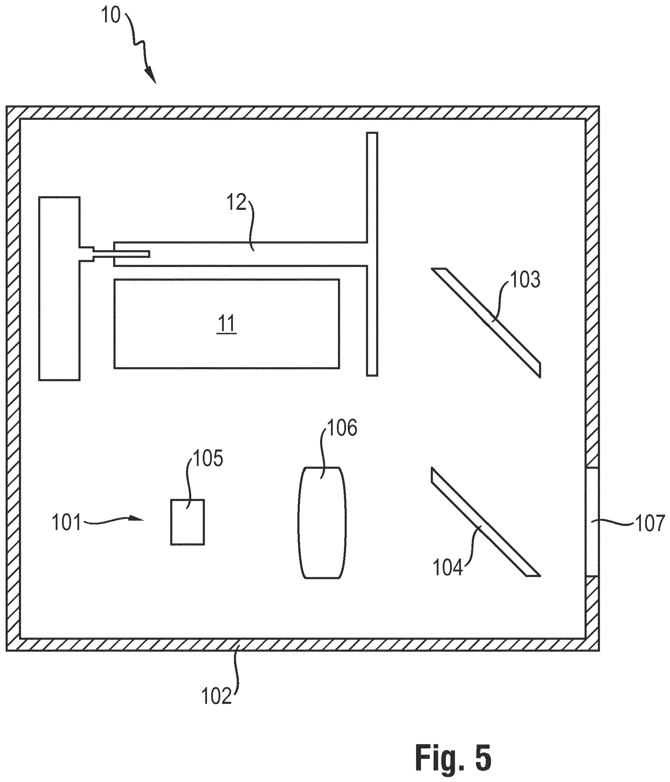

**FIG. 5** zeigt die in FIG. 1 dargestellte erfindungsgemäße Vorrichtung 10 zur optischen Distanzmessung, die mit einer Kameraeinrichtung **101** in einem Gerätegehäuse **102** angeordnet ist. Der in der Distanzmesseinrichtung 11 erzeugte Laserstrahl trifft auf die Einstelleinrichtung 12, die den Laserstrahl an das Zielobjekt anpasst. Damit der Strahlengang der Kameraeinrichtung 101 und der Strahlengang des Laserstrahls koaxial zueinander angeordnet sind, sind im Gerätegehäuse 102 ein erster und zweiter teildurchlässiger Spiegel **103, 104** angeordnet. Die Kameraeinrichtung 101 umfasst eine Sensoreinrichtung **105** und eine Kameraoptik **106.** Der Laserstrahl tritt über eine Auskoppelöffnung **107** aus dem Gerätegehäuse 102 aus und der am Zielobjekt reflektierte und/oder gestreute Empfangsstrahl tritt über die Auskoppelöffnung 107 in das Gerätegehäuse 102 ein.

## Patentansprüche

1. Vorrichtung (10; 60) zur optischen Messung einer Distanz zu einem reflektierenden oder streuenden Zielobjekt (47) mit einer Distanzmesseinrichtung (11; 61), umfassend:
▪ eine Strahlquelle (31), die als elektro-optische Komponente ausgebildet ist und einen Laserstrahl (41) aussendet,
▪ einen Detektor (32), der als weitere elektro-optische Komponente ausgebildet ist und einen am Zielobjekt (47) reflektierten und/oder gestreuten Empfangsstrahl (42) empfängt,
▪ ein erstes Strahlformungssystem (33; 63) mit einer ersten Sendeoptik (35; 64) zur Strahlformung des Laserstrahls (41) und einer ersten Empfangsoptik (36; 65) zur Strahlformung des Empfangsstrahls (42), wobei die erste Sendeoptik als Kollimationsoptik (35; 64) für den Laserstrahl (41) ausgebildet ist und einen kollimierten Laserstrahl (51) erzeugt, und
▪ einen Optikträger (13) mit einer ersten Aufnahme (37; 66) zur Befestigung einer ersten der elektro-optischen Komponenten (31; 32), einer zweiten Aufnahme (38; 67, 68) zur Befestigung des ersten Strahlformungssystems (33; 63) und einer Auskoppelöffnung (16),
und mit einer Einstelleinrichtung (12; 62; 92) umfassend eine zwischen einer ersten und zweiten Position verstellbaren, zweiten Sendeoptik (17.1-17.6; 48; 73) zur Strahlformung des Laserstrahls (41), wobei die zweite Sendeoptik (17.1-17.6; 48; 73) in der ersten Position im Laserstrahl (41) und in der zweiten Position außerhalb des Laserstrahls (41) angeordnet ist,
**dadurch gekennzeichnet, dass** die Einstelleinrichtung (12; 62; 92) im Strahlengang des Laserstrahls hinter der Auskoppelöffnung (16) außerhalb der Distanzmesseinrichtung (11; 61) angeordnet ist und dass die zweite Sendeoptik als Zerstreuungsoptik (17.1-17.6; 48; 73) für den kollimierten Laserstrahl (51) ausgebildet ist und einen aufgeweiteten Laserstrahl (52) erzeugt.

2. Vorrichtung nach Anspruch 1, **dadurch gekennzeichnet, dass** die Distanzmesseinrichtung (11; 61) eine Leiterplatte (14) mit einer Aufnahme (40; 69) zur Befestigung einer zweiten der elektro-optischen Komponenten (32; 31) und einer Verbindungseinrichtung (15), die die Leiterplatte (14) mit dem Optikträger (13) verbindet, aufweist.

3. Vorrichtung nach Anspruch 1, **dadurch gekennzeichnet, dass** die Einstelleinrichtung (12; 62) mehrere, zweite Sendeoptiken (17.1-17.6; 73) aufweist, wobei die zweiten Sendeoptiken als Zerstreuungsoptiken (17.1-17.6; 73) mit verschiedenen aufweitenden Eigenschaften ausgebildet sind.

4. Vorrichtung nach einem der Ansprüche 1 oder 3, **dadurch gekennzeichnet, dass** die Einstelleinrichtung (12; 71; 92) ein Optikrad (18; 74; 93) umfasst, das um eine Drehachse (20; 75; 94) verstellbar ist.

5. Vorrichtung nach einem der Ansprüche 1 oder 3, **dadurch gekennzeichnet, dass** die Einstelleinrichtung einen Optikschieber umfasst, der entlang einer Translationsachse verstellbar ist.

6. Vorrichtung nach Anspruch 1, **dadurch gekennzeichnet, dass** die Einstelleinrichtung (12; 62; 92) eine zwischen einer ersten und zweiten Position verstellbare, zweite Empfangsoptik (17.1-17.6; 77) zur Strahlformung des Empfangsstrahls (42) aufweist, wobei die zweite Empfangsoptik (17.1-17.6; 77) in der ersten Position im Empfangsstrahl (42) und in der zweiten Position außerhalb des Empfangsstrahls (42) angeordnet ist.

7. Vorrichtung nach Anspruch 6, **dadurch gekennzeichnet, dass** die erste Empfangsoptik als Fokussieroptik (36; 65) und die zweite Empfangsoptik als Streuscheibe (49; 77) ausgebildet ist.

8. Vorrichtung nach Anspruch 7, **dadurch gekennzeichnet, dass** die Einstelleinrichtung (12; 62) mehrere, zweite Empfangsoptiken (49; 77) zur Strahlformung des Empfangsstrahls (42) aufweist, wobei die zweiten Empfangsoptiken als Streuscheiben (49; 77) mit verschiedenen Eigenschaften ausgebildet sind.

9. Vorrichtung nach Anspruch 6, **dadurch gekennzeichnet, dass** die zweite Sendeoptik (48) und die zweite Empfangsoptik (49) in eine gemeinsame zweite Strahlformungsoptik (17.1-17.6) integriert sind.

10. Vorrichtung nach Anspruch 9, **dadurch gekennzeichnet, dass** die zweite Strahlformungsoptik (17.1-17.6) zwischen einer ersten und zweiten Position verstellbar ist, wobei die zweite Sendeoptik (48) in der ersten Position im Laserstrahl (41) und in der zweiten Position außerhalb des Laserstrahls (41) angeordnet ist und die zweite Empfangsoptik (49) in der ersten Position im Empfangsstrahl (42) und in der zweiten Position außerhalb des Empfangsstrahls (42) angeordnet ist.

## Claims

1. Apparatus (10; 60) for optically measuring a distance to a reflecting or scattering target object (47) using a distance measuring device (11; 61), comprising:
• a beam source (31), which is embodied as an electro-optic component and which emits a laser beam (41),
• a detector (32), which is embodied as a further electro-optic component and which receives a reception beam (42) that has been reflected and/or scattered at the target object (47),
• a first beam shaping system (33; 63) having a first transmitter optical unit (35; 64) for beam shaping of the laser beam (41) and a first receiver optical unit (36; 65) for beam shaping of the reception beam (42), wherein the first transmitter optical unit is embodied as a collimation optical unit (35; 64) for the laser beam (41) and generates a collimated laser beam (51), and
• an optical unit carrier (13) having a first receptacle (37; 66) for fastening a first of the electro-optic components (31; 32), a second receptacle (38; 67, 68) for fastening the first beam shaping system (33; 63) and an output coupling aperture (16),
and with a setting device (12; 62; 92) comprising a second transmitter optical unit (17.1-17.6; 48; 73), adjustable between a first and a second position, for beam shaping of the laser beam (41), wherein the second transmitter optical unit (17.1-17.6; 48; 73) is disposed in the laser beam (41) in the first position and disposed outside of the laser beam (41) in the second position,
**characterized in that** the setting device (12; 62; 92) is disposed in the beam path of the laser beam downstream of the output coupling opening (16) and outside of the distance measuring device (11; 61) and **in that** the second transmitter optical unit is embodied as a diverging optical unit (17.1-17.6; 48; 73) for the collimated laser beam (51) and generates an expanded laser beam (52).

2. Apparatus according to Claim 1, **characterized in that** the distance measuring device (11; 61) has a printed circuit board (14) with a receptacle (40; 69) for fastening the second of the electro-optic components (32; 31) and a connection device (15) which connects the printed circuit board (14) to the optical unit carrier (13).

3. Apparatus according to Claim 1, **characterized in that** the setting device (12; 62) has a plurality of second transmitter optical units (17.1-17.6; 73), wherein the second transmitter optical units are embodied as diverging optical units (17.1-17.6; 73) with different expanding properties.

4. Apparatus according to either of Claims 1 and 3, **characterized in that** the setting device (12; 71; 92) comprises an optical unit wheel (18; 74; 93), which is adjustable about an axis of rotation (20; 75; 94).

5. Apparatus according to either of Claims 1 and 3, **characterized in that** the setting device comprises an optical unit slider, which is adjustable along an axis of translation.

6. Apparatus according to Claim 1, **characterized in that** the setting device (12; 62; 92) has a second receiver optical unit (17.1-17.6; 77), adjustable between a first and second position, for beam shaping of the reception beam (42), wherein the second receiver optical unit (17.1-17.6; 77) is disposed in the reception beam (42) in the first position and disposed outside of the reception beam (42) in the second position.

7. Apparatus according to Claim 6, **characterized in that** the first receiver optical unit is embodied as a focusing optical unit (36; 46) and the second receiver optical unit is embodied as a diffusion panel (49; 77).

8. Apparatus according to Claim 7, **characterized in that** the setting device (12; 62) has a plurality of second receiver optical units (49; 77) for beam shaping of the reception beam (42), wherein the second receiver optical units are embodied as diffusion panels (49; 77) with different properties.

9. Apparatus according to Claim 6, **characterized in that** the second transmitter optical unit (48) and the second receiver optical unit (49) are integrated in a common second beam shaping optical unit (17.1-17.6).

10. Apparatus according to Claim 9, **characterized in that** the second beam shaping optical unit (17.1-17.6) is adjustable between a first and second position, wherein the second transmitter optical unit (48) is disposed in the laser beam (41) in the first position and disposed outside of the laser beam (41) in the second position and the second receiver optical unit (49) is disposed in the reception beam (42) in the first position and disposed outside of the reception beam (42) in the second position.

## Revendications

1. Dispositif (10 ; 60) servant à mesurer de manière optique une distance par rapport à un objet cible réfléchissant ou diffusant (47) à l'aide d'un équipement de mesure de distance (11 ; 61), comprenant :
• une source de faisceau (31), qui est réalisée sous la forme d'un composant électro-optique et qui émet un faisceau laser (41),
• un détecteur (32), qui est réalisé sous la forme d'un autre composant électro-optique et qui reçoit un faisceau de réception (42) réfléchi et/ou diffusé sur l'objet cible (47),
• un premier système de mise en forme de faisceau (33 ; 63) comprenant une première optique d'émission (35 ; 64) servant à mettre en forme le faisceau laser (41) et une première optique de réception (36 ; 65) servant à mettre en forme le faisceau de réception (42), dans lequel la première optique d'émission est réalisée sous la forme d'optique de collimation (35 ; 64) destinée au faisceau laser (41) et génère un faisceau laser collimaté (51), et
• un support d'optique (13) comportant un premier réceptacle (37 ; 66) destiné au montage d'un premier des composants électro-optiques (31 ; 32), un deuxième réceptacle (38 ; 67, 68) destiné au montage du premier système de mise en forme de faisceau (33 ; 63) et une ouverture de couplage en sortie (16),
et comportant un dispositif de réglage (12 ; 62 ; 92) comprenant un deuxième système optique d'émission (17.1-17.6 ; 48 ; 73), qui peut être réglé entre une première et une deuxième position, pour la mise en forme du faisceau laser (41), dans lequel la deuxième optique d'émission (17.1-17.6 ; 48 ; 73) est disposée, dans la première position, dans le faisceau laser (41) et, dans la deuxième position, en dehors du faisceau laser (41), **caractérisé en ce que** le dispositif de réglage (12 ; 62 ; 92) est disposé dans le chemin de faisceau du faisceau laser à l'arrière de l'ouverture de couplage en sortie (16) et en dehors du dispositif de mesure de distance (11 ; 61) et **en ce que** la deuxième optique d'émission est réalisée sous la forme d'une optique de dispersion (17.1-17.6 ; 48 ; 73) destinée au faisceau laser collimaté (51) et génère un faisceau laser élargi (52).

2. Dispositif selon la revendication 1, **caractérisé en ce que** le dispositif de mesure de distance (11 ; 61) comprend une carte de circuit imprimé (14) dotée d'un réceptacle (40 ; 69) pour la fixation d'un deuxième des composants électro-optiques (32 ; 31) et un dispositif de connexion (15) qui relie la carte de circuit imprimé (14) au support optique (13).

3. Dispositif selon la revendication 1, **caractérisé en ce que** le dispositif de réglage (12 ; 62) comprend une pluralité de deuxièmes optiques d'émission (17.1-17.6 ; 73), dans lequel les deuxièmes optiques d'émission sont réalisées sous la forme d'optiques de dispersion (17.1-17.6 ; 73) présentant des propriétés d'élargissement différentes.

4. Dispositif selon l'une des revendications 1 ou 3, **caractérisé en ce que** le dispositif de réglage (12 ; 71 ; 92) comprend une roue optique (18 ; 74 ; 93) qui est réglable autour d'un axe de rotation (20 ; 75 ; 94).

5. Dispositif selon l'une des revendications 1 ou 3, **caractérisé en ce que** le dispositif de réglage comprend un curseur optique qui est réglable le long d'un axe de translation.

6. Dispositif selon la revendication 1, **caractérisé en ce que** le dispositif de réglage (12 ; 62 ; 92) comprend une deuxième optique de réception (17.1-17.6 ; 77), qui est réglable entre une première et une deuxième position, pour la mise en forme du faisceau de réception (42), dans lequel la deuxième optique de réception (17.1-17.6 ; 77) est disposée, dans la première position, dans le faisceau de réception (42) et, dans la deuxième position, en dehors du faisceau de réception (42).

7. Dispositif selon la revendication 6, **caractérisé en ce que** la première optique de réception est réalisée sous la forme d'une optique de focalisation (36 ; 65) et la deuxième optique de réception est réalisée sous la forme d'une lentille diffusante (49 ; 77).

8. Dispositif selon la revendication 7, **caractérisé en ce que** le dispositif de réglage (12 ; 62) comporte une pluralité de deuxièmes optiques de réception (49 ; 77) pour la mise en forme de faisceau du faisceau reçu (42), dans lequel les deuxièmes optiques de réception sont réalisées sous la forme de lentilles diffusantes (49 ; 77) présentant des propriétés différentes.

9. Dispositif selon la revendication 6, **caractérisé en ce que** la deuxième optique d'émission (48) et la deuxième optique de réception (49) sont intégrées dans une deuxième optique de mise en forme de faisceau commune (17.1-17.6).

10. Dispositif selon la revendication 9, **caractérisé en ce que** la deuxième optique de mise en forme de faisceau (17.1-17.6) est réglable entre une première et une deuxième position, dans lequel la deuxième optique d'émission (48) est disposée, dans la première position, dans le faisceau laser (41) et, dans la deuxième position, en dehors du faisceau laser (41), et la deuxième optique de réception (49) est disposée, dans la première position, dans le faisceau de réception (42) et, dans la deuxième position, en dehors du faisceau de réception (42).
